# EUROPÄISCHE PATENTANMELDUNG

(11) **EP 3 739 400 A1**
(43) Veröffentlichungstag der Anmeldung: **18.11.2020**
(21) Anmeldenummer: 19174884.7
(22) Anmeldetag: 16.05.2019
(51) Int. Cl.: G05B 17/02

(54) **SUKZESSIVE FREQUENZGANGSCHÄTZUNG**

(71) Anmelder: Siemens Aktiengesellschaft, 80333 München (DE)
(72) Erfinder: Lenz, Eric, 64289 Darmstadt (DE); Bonnert, Marcel, 64546 Mörfelden-Waldorf (DE); Grieb, Herbert, 76316 Malsch (DE); Hermann, Jonathan, 64287 Darmstadt (DE); Konigorski, Ulrich, 76646 Bruchsal (DE); Labisch, Daniel, 76149 Karlsruhe (DE); Pfeiffer, Bernd-Markus, 76744 Wörth (DE)

(57) **Zusammenfassung**

Vorgeschlagen wird ein Verfahren zur Bestimmung eines dynamischen Prozessmodells eines technischen Prozesses anhand von Messdaten des technischen Prozesses, wobei die Messdaten Eingangssignaldaten und Ausgangssignaldaten des technischen Prozesses in einer Zeitreihe umfassen, das Verfahren aufweisend:
a) Unterteilung der Zeitreihe in eine Mehrzahl von Zeitintervallen, wobei jedes Zeitintervall eine Teilmenge der Messdaten umfasst;
b) Transformation der Messdaten jedes Zeitintervalls mittels einer Fourier-Transformation in den Frequenzraum,
c) Unterteilung der Messdaten in dem Frequenzraum in eine Mehrzahl an Frequenzintervallen mit sich unterscheidenden minimalen und maximalen Frequenzen, wobei sich die Frequenzintervalle vorzugsweise nicht überlappen;
d) Für jedes Frequenzintervall aller Zeitintervalle wird für die Teilmenge der Messdaten eine Integration der quadrierten Frequenzdaten vorgenommen, um jeweils eine Signalleistung der Messdaten in dem betrachteten Zeitintervall und Frequenzintervall zu bestimmen;
e) Für den Fall, dass ein Betrag der Signalleistung größer als ein bestimmter Schwellwert ist, wird für die betreffenden Zeitintervalle mittels einer Bestimmung eines ARX-Modells jeweils ein Frequenzgang innerhalb des Frequenzintervalls bestimmt;
f) Vereinigung aller im Verfahrensschritt e berechneten Frequenzgänge, um ein nichtparametrisches Modell des technischen Prozesses im Frequenzbereich zu erhalten.

## Beschreibung

Die Erfindung betrifft ein Verfahren mit den Merkmalen des Anspruchs 1. Außerdem betrifft die Erfindung ein Verfahren gemäß Anspruch 5 und ein in einem computerlesbaren Speicher hinterlegtes Modell eines technischen Prozesses gemäß Anspruch 9.

Die Erfindung betrifft die Identifikation dynamischer Modelle aus Messdaten eines technischen Prozesses. Die Messdaten liegen in Form von Werten der Ein- und Ausgangsvariablen in einer festen Abtastzeit über einen längeren Zeitraum vor. Derartige dynamische Modelle sollen in der Regel ein dynamisches Verhalten des Prozesses für beliebige Eingangssignale realistisch darstellen. Meist beschränkt man sich jedoch auf lineare Modelle, die bei nichtlinearen Prozessen nur in einem beschränkten Arbeitsbereich eine gute Näherung darstellen.

Regelmäßig wird eine bestimmte Struktur des mathematischen Modells festgelegt und die Parameter dieses Modells so bestimmt, dass die Messdaten möglichst gut durch das Modell wiedergegeben werden. Der Informationsgehalt der Messdaten hängt vom Stör-/Nutzsignalverhältnis und von der Art der Anregung ab und kann für verschiedene Zeitabschnitte längerer Datensätze unterschiedlich sein.

Es existiert eine Vielzahl von Möglichkeiten, das Verhalten dynamischer Prozesse mathematisch zu beschreiben. Für jeden Modelltyp gibt es verschiedenen Möglichkeiten zur Identifikation der Parameter aus Messdaten. Die Modelltypen können nach verschiedenen Merkmalen klassifiziert werden:
- Parametrisch/nicht-parametrisch: Ein parametrisches Modell lässt sich durch eine Formel mit einer beschränkten Anzahl an Parametern beschreiben, z.B. s-Übertragungsfunktion, z-Übertragungsfunktion. Dagegen werden nichtparametrische Modelle durch eine (im Allgemeinen recht große) Menge von Messdaten beschrieben. Beispiele hierfür sind die FIR (Finite Impulse Response) oder die FSR (Finite Step Response) Methoden.
- Zeitbereich/Frequenzbereich: Modelle im Zeitbereich ermöglichen die Berechnung des zeitlichen Verlaufs der Ausgangssignale eines Prozesses anhand des zeitlichen Verlaufs der Eingangssignale und sind dadurch beispielsweise für eine Simulation geeignet. Modelle im Frequenzbereich beschreiben den Frequenzgang eines Prozesses, d.h. wie sich harmonische Eingangsschwingungen verschiedener Frequenz auf die Ausgangsseite übertragen. Dabei werden sowohl die Signalamplitude als auch eine Phasenverschiebung (zeitlicher Versatz zwischen Ein- und Ausgangsschwingung) betrachtet.
- Zeitkontinuierlich/zeitdiskret: Zeitkontinuierliche Modelle werden durch Differentialgleichungen oder deren Laplace-Transformation dargestellt und sind unabhängig von einer Abtastzeit. Zeitdiskrete Modelle werden durch zeitliche Differenzengleichungen oder deren z-Transformation dargestellt und verknüpfen Daten, die mit einer festen Abtastzeit erfasst sind.

Ein besonders häufig eingesetztes Identifikationsverfahren ist das ARX-Verfahren (ARX: Auto-Regressive with eXogenous inputs), mit dem die Parameter einer z-Übertragungsfunktion geschätzt werden können. Dabei wird der so genannte Gleichungsfehler (Abweichung zwischen Einschritt-Prädiktion des Modells und entsprechenden Messdaten) minimiert. Weil der Gleichungsfehler linear von den zu schätzenden Modellparametern abhängt, lässt sich die Minimierung der Fehlerquadratsumme über alle Messdaten durch die Lösung eines überbestimmen linearen Gleichungssystems erreichen und erfordert daher nur einen sehr geringen Rechenaufwand.

Die Anzahl der Modellparameter ist relativ gering, sodass die Gefahr eines "Overfittings" nicht besteht. Overfitting bedeutet dabei, dass ein Modell die Lerndaten inkl. der darin enthaltenen Störungen sehr exakt abbildet, aber bei anderen Daten vom selben Prozess schlechte Ergebnisse zeigt, weil nicht nur das Prozessverhalten selbst, sondern auch die in den Lerndaten enthaltenen Störungen Teil des Prozessmodells geworden sind.

Ein weiterer Vorteil des ARX-Verfahrens liegt darin, dass zahlreiche (gegebenenfalls sehr kurze) nicht zusammenhängende Zeitabschnitte aus den Messdaten bereits für die Identifikation ausreichend sein können. Dem gegenüber stehen folgende Einschränkungen und Nachteile des ARX-Verfahrens:
- Das Messrauschen muss für eine konsistente Schätzung der ARX-Annahme entsprechen, d.h. sich aus weißem Rauschen durch Filterung mit dem Nennerpolynom des ARX-Modells herleiten lassen. Dies ist im Allgemeinen bei realen Prozessen nicht der Fall. Um zu verwendbaren Modellen zu kommen, muss das Rauschen daher sehr gering sein. Daher sollte auf jeden Fall eine Tiefpassfilterung der Messdaten vorgenommen werden.
- Die Abtastzeit muss angemessen gewählt sein. Ist sie zu klein gewählt, entstehen schlecht konditionierte Gleichungssysteme, deren Zeilen sich kaum voneinander unterscheiden. Die Wahl der Abtastzeit erfordert also Vorkenntnisse zum Prozessverhalten.
- Ein Gleichanteil in den Messdaten, d.h. wenn die Daten nicht als Abweichungen von einem Arbeitspunkt, sondern als Absolutwerte gegeben sind, kann ebenfalls kritisch für die Identifikation sein. Häufig ist daher eine Hochpassfilterung erforderlich.
- Die Systemordnung muss vom Anwender vorgegeben werden, was entsprechende Vorkenntnisse über den Prozess voraussetzt.

Der Erfindung liegt die Aufgabe zugrunde, ein Verfahren zur Bestimmung eines dynamischen Prozessmodells eines technischen Prozesses anzugeben, welches die zuvor genannten Nachteile vermeidet und gleichzeitig eine hohe Effizienz aufweist. Diese Aufgabe wird gelöst durch ein Verfahren mit den Merkmalen des Anspruchs 1. Außerdem wird die Aufgabe gelöst durch ein Verfahren gemäß Anspruch 5 und ein in einem computerlesbaren Speicher hinterlegtes Modell eines technischen Prozesses gemäß Anspruch 9. Vorteilhafte Weiterbildungen ergeben sich aus den abhängigen Ansprüchen.

Ein erfindungsgemäßes Verfahren zur Bestimmung eines dynamischen Prozessmodells eines technischen Prozesses anhand von Messdaten des technischen Prozesses, wobei die Messdaten Eingangssignaldaten und Ausgangssignaldaten des technischen Prozesses in einer Zeitreihe umfassen, umfasst die folgenden Verfahrensschritte:
a) Filterung der Messdaten, um die Messdaten in eine Mehrzahl an Frequenzintervallen mit sich unterscheidenden minimalen und maximalen Frequenzen zu unterteilen, wobei sich die Frequenzintervalle vorzugsweise nicht überlappen;
b) Für jedes Frequenzintervall wird eine Abtastung der gefilterten Messdaten im Zeitraum mit einer Abtastfrequenz vorgenommen, wobei ein Betrag der Abtastfrequenz wenigstens doppelt so groß ist wie ein Betrag der jeweils maximalen Frequenz des betreffenden Frequenzintervalls, vorzugsweise dreimal so groß, höchst vorzugsweise viermal so groß;
c) Für jedes Frequenzintervall wird der korrespondierende Teil der Zeitreihe in eine Mehrzahl von Zeitintervallen unterteilt, wobei jedes Zeitintervall eine Teilmenge der Messdaten umfasst, und wobei eine Länge des Zeitintervalls von den in dem jeweiligen Frequenzintervall enthaltenen Frequenzen abhängt;
d) Für jedes Zeitintervall aller Frequenzintervalle wird für die jeweilige Teilmenge der Messdaten eine Integration der quadrierten Messdaten vorgenommen, um eine Signalleistung der Messdaten in dem Zeitintervall zu bestimmen;
e) Für den Fall, dass ein Betrag der Signalleistung größer als ein bestimmter Schwellwert ist, wird für die betreffenden Zeitintervalle jeweils ein ARX-Modell der Teilmenge der Messdaten mittels einer Minimierung von Fehlerquadratsummen ermittelt;
f) Berechnung eines Frequenzgangs des ARX-Modells für jeweils alle Frequenzen innerhalb der im Verfahrensschritt e identifizierten Zeitintervalle;
g) Vereinigung aller im Verfahrensschritt f berechneten Frequenzgänge, um ein nichtparametrisches Modell des technischen Prozesses im Frequenzraum zu erhalten.

Unter einem technischen Prozess wird allgemein ein Vorgang verstanden, durch welchen Energie, Materie oder Informationen in ihrem Zustand verändert werden. Dabei kann die Zustandsänderung beispielsweise von einem Anfangszustand in einen Endzustand erfolgen. Der technische Prozess erfolgt in einem technischen System. Unter einem technischen System wird vorliegend eine Mehrzahl an Maschinen, Geräten, Applikationen oder dergleichen verstanden, die in einem funktionalen und oftmals auch räumlichen Zusammenhang zueinanderstehen. Mittels des technischen Systems können beispielsweise in (groß-) technischen Dimensionen Produkte, Komponenten und dergleichen erzeugt bzw. gefertigt werden. Bei dem technischen System kann es sich beispielsweise aber auch um ein Automobil, ein Schiff, ein Flugzeug oder dergleichen handeln. Bei dem technischen System kann es sich beispielsweise um eine Anlage aus der Prozessindustrie wie beispielsweise eine chemische, pharmazeutische, petrochemische oder eine Anlage aus der Nahrungs- und Genussmittelindustrie handeln. Von dem Begriff "technisches System" sind aber auch jegliche Anlagen aus der Produktionsindustrie umfasst, Werke, in denen z.B. Autos oder Güter aller Art produziert werden. Auch aus dem Bereich der Energieerzeugung wie Windräder, Solaranlagen oder Kraftwerke zur Energieerzeugung können solche technischen Systeme stammen.

Die Messdaten liegen vorliegend in einer zeitlichen Reihe vor und lassen sich entlang eines Zeitstrahls in eine zeitliche Reihenfolge bzw. Ordnung bringen. Die Messdaten umfassen Eingangssignaldaten und Ausgangssignaldaten des technischen Prozesses.

Durch eine frequenzorientierte Filterung der Messdaten wird der gesamte Frequenzbereich der Messdaten in einzelne Frequenzintervalle unterteilt. Die einzelnen Frequenzintervalle müssen sich dabei nicht überlappen. Eine Überlappung ist aber auch nicht auszuschließen.

Nach der frequenzorientierten Filterung und der Abtastung der Messdaten wird jedes Frequenzintervall in eine Mehrzahl von Zeitintervallen unterteilt. Dadurch bleibt die Anzahl der Daten für jede Einzelidentifikation klein und mögliche Fehler, Zeitvarianzen oder Nichtlinearitäten beeinflussen lediglich einzelne Zeitintervalle des betreffenden Frequenzintervalls und nicht die komplette anschließende Schätzung. Die Länge der Zeitintervalle hängt von den in den jeweiligem Frequenzintervall betrachteten Frequenzen ab. Dadurch ergibt sich für jedes Frequenzintervall eine andere Menge an Zeitintervallen. Die einzelnen Zeitintervalle können sich überlappen. Beispielsweise kann eine Überlappung benachbarter Zeitintervalle einen Grad von 50 Prozentpunkten aufweisen.

Für jedes der Zeitintervalle jedes Frequenzintervalls wird eine Analyse vorgenommen, ob eine anschließende Schätzung überhaupt sinnvoll ist. Im Wesentlichen wird dabei geprüft, ob die Anregung ausreichend ist. Dies erfolgt durch eine Integration der quadrierten Messdaten, um die Signalleistung anzunähern. Die Überprüfung kann sich ausschließlich auf die Eingangssignaldaten beziehen. Zusätzlich ist es aber auch möglich, dass eine Analyse der Ausgangssignaldaten vorgenommen wird, wobei das Erreichen eines bestimmten Mindestpegels innerhalb des betrachteten Zeitintervalls/Frequenzintervalls überprüft werden kann.

Für den Fall, dass ein Betrag der Signalleistung größer als ein bestimmter Schwellwert ist, wird für die betreffenden Zeitintervalle jeweils ein ARX-Modell erstellt. Dabei kann der Vorteil des ARX-Verfahrens ausgenutzt werden, dass sich die Lösung einfach berechnen lässt und auch kurze Zeitintervalle verwendet werden können. Der Nachteil des großen Rauscheinflusses ist dabei dadurch minimiert, dass der jeweils betrachtete Ausschnitt der Messdaten nur noch Frequenzanteile innerhalb des betrachteten Frequenzintervalls besitzt und zudem sichergestellt ist, dass die Anregung ausreichend groß ist. Die Ordnung der ARX-Schätzung muss nicht der wahren Systemordnung entsprechen, sondern kann auch größer oder kleiner sein. Vielmehr wird ein Modell geschätzt, welches im betrachteten Frequenzbereich den Frequenzgang des technischen Prozesses gut abbildet.

Von dem ARX-Modell wird nur der Frequenzgang an den Frequenzen des aktuellen Zeitintervalls berechnet und gespeichert, das geschätzte ARX-Modell kann wieder verworfen werden. Die Berechnung kann für alle in Frage kommenden Zeitintervalle der betreffenden Frequenzintervalle bei Verwendung einer geeigneten Berechnungsarchitektur in besonders vorteilhafter Weise parallel und dadurch schnell durchgeführt werden.

Zuletzt ergibt sich die gesamte Frequenzgangs-Schätzung durch die Vereinigung aller ermittelten Frequenzgangs-Punkte. Das Ergebnis ist ein nichtparametrisches Modell des technischen Prozesses im Frequenzbereich.

Ein wesentlicher Vorteil des erfindungsgemäßen Verfahrens liegt darin, dass keinerlei Vorkenntnisse über das technische System bzw. den technischen Prozess benötigt werden. Insbesondere muss keine Systemordnung oder Anzahl von Nullstellen vorgegeben werden. Zudem ist man nicht auf ein diskretes oder kontinuierliches System festgelegt. Beim Ableiten der parametrischen Übertragungsfunktion ergeben sich Ordnung und Differenzordnung aus dem Verlauf des Frequenzganges selbst, ohne dass man auf Vorkenntnisse angewiesen ist. Zudem sind auch keine Vorkenntnisse zur Wahl der Abtastzeit erforderlich.

Das erfindungsgemäße Verfahren nutzt einzelne kurze Zeitabschnitte aus längeren Messdatensätzen im Hinblick auf ihren Informationsgehalt optimal aus. Es ist daher nicht darauf angewiesen, dass es in dem Messdatensatz markante längere Zeitabschnitte mit besonders hohem Informationsgehalt gibt, wie z.B. einen Sollwert- oder Stellgrößensprung in einem Regelkreis.

Durch die Fokussierung auf Zeitbereiche, in denen bestimmte Frequenzen besonders gut angeregt sind, kann das Verfahren auch auf stark verrauschte Signale angewendet werden.

Die tatsächliche Prozessdynamik ist auch bei (langsamer) Zeitvarianz erkennbar, bzw. auch bei langsamen Störungen, die den Arbeitspunkt beeinflussen. Solche Effekte sind für andere Verfahren, die von linearen zeitinvarianten Modellen ausgehen, äußerst kritisch. Starke Störungen, die nur in einem begrenzten Zeitintervall oder einem begrenzten Frequenzbereich auftreten, werden bei dem erfindungsgemäßen Verfahren ausgespart, während sie bei vielen anderen vergleichbaren (Identifikations-)Verfahren das Ergebnis insgesamt verfälschen.

Bevorzugt erfolgt die (Frequenz-)Filterung der Messdaten mittels einer Mehrzahl an verschiedenen Tiefpassfiltern und Hochpassfiltern im Zeitraum. Im "Zeitraum" bedeutet dabei, dass die Messdaten unmittelbar betrachtet werden (und keine Transformation in den Frequenzraum oder dergleichen durchgeführt wird). Neben der Tiefpassfilterung, die neben der allgemeinen Rauschunterdrückung auch das Aliasing durch die Unterabtastung minimieren soll, wird auch ein Hochpassfilter angewandt, so dass die Messdaten nach diesem Schritt (im Wesentlichen) nur noch Frequenzen innerhalb des betrachteten Frequenzintervalls aufweisen.

Alternativ kann die Filterung der Messdaten gemäß den folgenden Verfahrensschritten vorgenommen werden:
i) Die Messdaten werden mittels einer Fourier-Transformation in den Frequenzraum transformiert;
ii) In dem Frequenzraum wird eine Bandpassfilterung durchgeführt, um die Messdaten in eine Mehrzahl an Teilfrequenzintervallen mit sich unterscheidenden minimalen und maximalen Frequenzen zu unterteilen, wobei sich die Teilfrequenzintervalle vorzugsweise nicht überlappen;
iii) Die in dem Frequenzraum gefilterten Messdaten werden im Anschluss über eine inverse Fourier-Transformation in den Zeitraum rücktransformiert, um im Anschluss die übrigen Verfahrensschritte wie zuvor erläutert auszuführen.

Vorteilhafterweise können bei der Anwendung der Fourier-Transformation geeignete Maßnahmen zur Minimierung von Fenstereffekten eingesetzt werden. Insbesondere können zur Erreichung dieses Zwecks die Zeitintervalle erweitert werden.

Die Länge des Zeitintervalls kann für jedes Frequenzintervall derart gewählt werden, dass ein Betrag der Länge des Zeitintervalls ein Vielfaches von einem reziproken Betrag der minimalen Frequenz des jeweiligen Frequenzintervalls ist.

Die zuvor erläuterte Aufgabe wird zudem durch ein Verfahren zur Bestimmung eines dynamischen Prozessmodells eines technischen Prozesses anhand von Messdaten des technischen Prozesses gelöst, wobei die Messdaten Eingangssignaldaten und Ausgangssignaldaten des technischen Prozesses in einer Zeitreihe umfassen. Das Verfahren weist die folgenden Schritte auf:
a) Unterteilung der Zeitreihe in eine Mehrzahl von Zeitintervallen, wobei jedes Zeitintervall eine Teilmenge der Messdaten umfasst;
b) Transformation der Messdaten jedes Zeitintervalls mittels einer Fourier-Transformation in den Frequenzraum,
c) Unterteilung der Messdaten in dem Frequenzraum in eine Mehrzahl an Frequenzintervallen mit sich unterscheidenden minimalen und maximalen Frequenzen, wobei sich die Frequenzintervalle vorzugsweise nicht überlappen;
d) Für jedes Frequenzintervall aller Zeitintervalle wird für die Teilmenge der Messdaten eine Integration der quadrierten Frequenzdaten vorgenommen, um jeweils eine Signalleistung der Messdaten in dem betrachteten Zeitintervall und Frequenzintervall zu bestimmen;
e) Für den Fall, dass ein Betrag der Signalleistung größer als ein bestimmter Schwellwert ist, wird für die betreffenden Zeitintervalle jeweils ein Frequenzgang innerhalb des Frequenzintervalls bestimmt;
f) Vereinigung aller im Verfahrensschritt e berechneten Frequenzgänge, um ein nichtparametrisches Modell des technischen Prozesses im Frequenzbereich zu erhalten.

Als Alternative zu dem zuvor ausgeführten Verfahren erfolgt die Schätzung hierbei demnach direkt im Frequenzraum, ohne dass eine Rücktransformation der Messdaten in den Zeitraum notwendig wäre.

Die Länge der Zeitintervalle gemäß Schritt a kann in Abhängigkeit der betrachteten Frequenzbereiche aus Schritt c gewählt werden.

Generell kann bei allen zuvor erläuterten Verfahren ein Betrag der maximalen Frequenzen der einzelnen Frequenzintervalle jeweils doppelt so groß sein wie ein Betrag der minimalen Frequenzen der einzelnen Frequenzintervalle. Mit anderen Worten deckt jeder Frequenzbereich eine Oktave ab.

Das durch die zuvor erläuterten Verfahren erhaltene nichtparametrische Modell kann bei einer vorteilhaften Weiterbildung der Erfindung automatisiert durch ein parametrisches Modell, insbesondere eine s-Übertragungsfunktion, approximiert werden. Dies kann insbesondere mittels einer Minimierung von Fehlerquadratsummen erfolgen.

Die Aufgabe wird zudem gelöst durch ein in einem computerlesbaren Speicher hinterlegtes Modell eines technischen Prozesses, das gemäß einem Verfahren wie zuvor erläutert bestimmt worden ist.

## Patentansprüche

1. Verfahren zur Bestimmung eines dynamischen Prozessmodells eines technischen Prozesses anhand von Messdaten des technischen Prozesses, wobei die Messdaten Eingangssignaldaten und Ausgangssignaldaten des technischen Prozesses in einer Zeitreihe umfassen, das Verfahren aufweisend:
a) Filterung der Messdaten, um die Messdaten in eine Mehrzahl an Frequenzintervallen mit sich unterscheidenden minimalen und maximalen Frequenzen zu unterteilen, wobei sich die Frequenzintervalle vorzugsweise nicht überlappen;
b) Für jedes Frequenzintervall wird eine Abtastung der gefilterten Messdaten im Zeitraum mit einer Abtastfrequenz vorgenommen, wobei ein Betrag der Abtastfrequenz wenigstens doppelt so groß ist wie ein Betrag der jeweils maximalen Frequenz des betreffenden Frequenzintervalls, vorzugsweise dreimal so groß, höchst vorzugsweise viermal so groß;
c) Für jedes Frequenzintervall wird der korrespondierende Teil der Zeitreihe in eine Mehrzahl von Zeitintervallen unterteilt, wobei jedes Zeitintervall eine Teilmenge der Messdaten umfasst, und wobei eine Länge jedes Zeitintervalls von den in dem jeweiligen Frequenzintervall enthaltenen Frequenzen abhängt;
d) Für jedes Zeitintervall aller Frequenzintervalle wird für die jeweilige Teilmenge der Messdaten eine Integration der quadrierten Messdaten vorgenommen, um eine Signalleistung der Messdaten in dem Zeitintervall zu bestimmen;
e) Für den Fall, dass ein Betrag der Signalleistung größer als ein bestimmter Schwellwert ist, wird für die betreffenden Zeitintervalle jeweils ein ARX-Modell der Teilmenge der Messdaten mittels einer Minimierung von Fehlerquadratsummen ermittelt;
f) Berechnung eines Frequenzgangs des ARX-Modells für jeweils alle Frequenzen innerhalb der im Verfahrensschritt e identifizierten Zeitintervalle;
g) Vereinigung aller im Verfahrensschritt f berechneten Frequenzgänge, um ein nichtparametrisches Modell des technischen Prozesses im Frequenzbereich zu erhalten.

2. Verfahren nach Anspruch 1, bei dem die Filterung der Messdaten gemäß Verfahrensschritt a mittels einer Mehrzahl an verschiedenen Tiefpassfiltern und Hochpassfiltern im Zeitraum erfolgt.

3. Verfahren nach Anspruch 1, bei dem die Filterung der Messdaten gemäß Verfahrensschritt a dadurch erfolgt, dass
i) die Messdaten mittels einer Fourier-Transformation in den Frequenzraum transformiert werden;
ii) in dem Frequenzraum eine Bandpassfilterung durchgeführt wird, um die Messdaten in eine Mehrzahl an Teilfrequenzintervallen mit sich unterscheidenden minimalen und maximalen Frequenzen zu unterteilen, wobei sich die Teilfrequenzintervalle vorzugsweise nicht überlappen; und
iii) die in dem Frequenzraum gefilterten Messdaten über eine inverse Fourier-Transformation in den Zeitraum rücktransformiert werden, um im Anschluss die übrigen Verfahrensschritte b bis g gemäß Anspruch 1 auszuführen.

4. Verfahren nach einem der vorangegangenen Ansprüche, bei dem die Länge des Zeitintervalls gemäß Verfahrensschritt c von Anspruch 1 für jedes Frequenzintervall derart gewählt wird, dass ein Betrag der Länge des Zeitintervalls ein Vielfaches von einem reziproken Betrag der minimalen Frequenz des jeweiligen Frequenzintervalls ist.

5. Verfahren zur Bestimmung eines dynamischen Prozessmodells eines technischen Prozesses anhand von Messdaten des technischen Prozesses, wobei die Messdaten Eingangssignaldaten und Ausgangssignaldaten des technischen Prozesses in einer Zeitreihe umfassen, das Verfahren aufweisend:
a) Unterteilung der Zeitreihe in eine Mehrzahl von Zeitintervallen, wobei jedes Zeitintervall eine Teilmenge der Messdaten umfasst;
b) Transformation der Messdaten jedes Zeitintervalls mittels einer Fourier-Transformation in den Frequenzraum,
c) Unterteilung der Messdaten in dem Frequenzraum in eine Mehrzahl an Frequenzintervallen mit sich unterscheidenden minimalen und maximalen Frequenzen, wobei sich die Frequenzintervalle vorzugsweise nicht überlappen;
d) Für jedes Frequenzintervall aller Zeitintervalle wird für die Teilmenge der Messdaten eine Integration der quadrierten Frequenzdaten vorgenommen, um jeweils eine Signalleistung der Messdaten in dem betrachteten Zeitintervall und Frequenzintervall zu bestimmen;
e) Für den Fall, dass ein Betrag der Signalleistung größer als ein bestimmter Schwellwert ist, wird für die betreffenden Zeitintervalle jeweils ein Frequenzgang innerhalb des Frequenzintervalls bestimmt;
f) Vereinigung aller im Verfahrensschritt e berechneten Frequenzgänge, um ein nichtparametrisches Modell des technischen Prozesses im Frequenzbereich zu erhalten.

6. Verfahren nach Anspruch 5, wobei die Länge der Zeitintervalle in Schritt a gemäß Anspruch 5 in Abhängigkeit von den betrachteten Frequenzbereichen aus Schritt c gemäß Anspruch 5 vorgegeben wird.

7. Verfahren nach einem der vorangegangenen Ansprüche, bei dem ein Betrag der maximalen Frequenzen der einzelnen Frequenzintervalle jeweils doppelt so groß ist wie ein Betrag der minimalen Frequenzen der einzelnen Frequenzintervalle.

8. Verfahren nach einem der vorangegangenen Ansprüche, bei dem das gemäß Verfahrensschritt g von Anspruch 1 und/oder Verfahrensschnitt f von Anspruch 5 erhaltene nichtparametrische Modell automatisiert durch ein parametrisches Modell, insbesondere eine s-Übertragungsfunktion, approximiert wird, insbesondere mittels einer Minimierung von Fehlerquadratsummen.

9. In einem computerlesbaren Speicher hinterlegtes Modell eines technischen Prozesses, das gemäß einem Verfahren der Ansprüche 1 bis 8 bestimmt worden ist.
